(19) **Europäisches Patentamt**
**European Patent Office**
**Office européen des brevets**

(11) **EP 1 921 467 B1**

(12) **EUROPEAN PATENT SPECIFICATION**

(45) Date of publication and mention
of the grant of the patent:
**16.09.2015 Bulletin 2015/38**

(51) Int Cl.:
***G01T 1/161*** *(2006.01)*    ***G01T 1/29*** *(2006.01)*

(21) Application number: **06781779.1**

(86) International application number:
**PCT/JP2006/314868**

(22) Date of filing: **27.07.2006**

(87) International publication number:
**WO 2007/013550 (01.02.2007 Gazette 2007/05)**

(54) **TOMOGRAPH, TOMOGRAPHY, TOMOGRAPHY PROGRAM, AND COMPUTER-READABLE RECORDING MEDIUM WHERE THE PROGRAM IS RECORDED**

TOMOGRAPH, TOMOGRAPHIE, TOMOGRAPHIEPROGRAMM UND COMPUTERLESBARES AUFZEICHNUNGSMEDIUM, IN DEM DAS PROGRAMM AUFGEZEICHNET IST

TOMOGRAPHE, TOMOGRAPHIE, PROGRAMME DE TOMOGRAPHIE ET SUPPORT D ENREGISTREMENT LISIBLE PAR ORDINATEUR SUR LEQUEL LE PROGRAMME EST ENREGISTRÉ

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.07.2005 JP 2005220352**

(43) Date of publication of application:
**14.05.2008 Bulletin 2008/20**

(73) Proprietor: **Iida, Hidehiro**
**Suita-shi, Osaka 565-8565 (JP)**

(72) Inventor: **IIDA, Hidehiro**
**Suita-shi,**
**Osaka 565-8565 (JP)**

(74) Representative: **Zimmermann & Partner**
**Patentanwälte mbB**
**Postfach 330 920**
**80069 München (DE)**

(56) References cited:
**EP-A1- 1 004 898      EP-A2- 1 132 756**
**JP-A- 08 122 438      US-A- 5 717 212**

• **TSUTOMU ZENIYA ET AL: "A new reconstruction strategy for image improvement in pinhole SPECT", EUROPEAN JOURNAL OF NUCLEAR MEDICINE AND MOLECULAR IMAGING, vol. 31, no. 8, 1 August 2004 (2004-08-01) , pages 1166-1172, XP55035756, ISSN: 1619-7070, DOI: 10.1007/s00259-004-1510-4**

**Description**

TECHNICAL FIELD

The present invention relates to a tomograph represented by single photon emission computer tomograph ("SPECT") and positron emission tomograph ("PET").

BACKGROUND ART

Single photon emission computer tomograph ("SPECT") has been known as a tomograph that makes it possible to view images of the distributions of drugs tagged with radioactive isotopes that are administered into subject human bodies. A SPECT apparatus causes a collimeter mounted on the surface of a position detecting type radiation detector to rotate around the periphery of the subject to collect radiation data for the entire circumference, and analyzes the signal synchronized with the rotation to estimate the distribution of the radioactive drug inside the subject. A SPECT apparatus equipped with a pin-hole collimeter, which has a single hole as a collimeter, through which radiations from the subject is projected to the radiation detector as a cone beam pass through the hole, has advantages that its design constitution is simple, and can improve spatial resolution by taking pictures by approaching the subject by making the hole diameter smaller, so that it is suitably used for tomography of small animals such as rats, mice, etc.

On the other hand, in order to obtain the perfect image reconstruction in a SPECT apparatus equipped with a pinhole collimeter, the Tuy's condition (see: cited non-patent document 1) is proposed, which premise does not hold in a cross section other than the plane of rotation in the geometrical design of the conventional pinhole SPECT apparatus, so that such a design had shortcomings that it is impossible to measure radiation density accurately on a cross section that does not include the hole while the image on the plane of rotation that includes the hole can be accurately reconstructed at least theoretically; moreover, even the image on the plane of rotation including the hole may suffer an image distortion due to uneven resolution.

To the contrary, cited patent document 1 discloses a pinhole SPECT apparatus for detecting radiations not just on one plane of rotation including the center of the field of view but also radiations outside of the plane of rotation by having one or more position detecting type radiation detectors equipped with a pinhole collimeter to capture the subject always within the field of view, as well as by arranging detector positions, pinhole position offsets, cradling motion of the base, etc. According to the particular SPECT apparatus, it is possible to improve the resolution of the reconstructed images obtained by the image data since it is so constructed to cause the image data to satisfy the Tuy's condition by detecting radiations offset from the plane of rotation.

Moreover, the cited non-patent document 1 discloses a pinhole SPECT apparatus that causes the pinhole of the detector to rotate around the subject along two orbits, one at an angle of 90° and the other at 45° relative to the axis of the subject. According to this SPECT apparatus, the use of two pinhole orbits allows the image data to satisfy the Tuy's condition and makes it possible to obtain the perfect 3D pinhole SPECT reconstruction images in all view angles. US 5 717 212 A relates to single photon emission computed tomography camera systems. EP 1 004 898 A1 relates to a support comprising two rings for a gamma-camera for use in tomography, such as position emission tomography or single photon emission computed tomography. EP 1 132 756 A2 relates to a method of diagnostic imaging using a nuclear medicine gamma camera suitable for inter alia tomography applications.

Patent document 1: JP-2004-233149A
Non-patent document 1: H. K. Tuy. An inversion formula for cone-beam reconstruction. SIAM J. APPL. MATH. Vol. 43, No. 3, 546-552 (1983)
Non-patent document 2: Tsutomu Zeniya, A new reconstruction strategy for image improvement in pinhole SPECT, European Journal of Nuclear Medicine and Molecular Imaging Vol. 31, No. 8, 1166-1172 (2004)

DISCLOSURE OF THE INVENTION

PROBLEM TO BE SOLVED BY THE INVENTION

However, although such a tomograph of prior art allows to capture reconstructed image of high resolution in case of a small subject, such as a small animal, it has a problem that the truncation problem occurs when the subject is as large as a human body. Such a truncation problem can be avoided by making the orbit angle large enough relative to the subject, the resolution inherently deteriorates as the distance between the detector and the subject gets larger making it more difficult to obtain reconstructed images of high resolution so that it is difficult to achieve both the avoidance of truncation and the improvement of resolution simultaneously.

The present invention intends to solve such a problem and provide a tomograph capable of obtaining high resolution reconstructed images without truncation for large subjects such as human bodies.

MEANS FOR SOLVING PROBLEM

The abovementioned objective can be achieved by the emission tomograph of claim 1 and emission tomography method of claim 6.

The present invention is an emission tomograph according to claim 1 comprising a first detecting unit that has one or more radiation detectors and is adapted to move around a subject along a first orbit, and a second detecting unit that has one or more radiation detectors and is adapted to move around said subject along a second orbit that is placed further away from said subject than said first orbit, and an image reconstructing unit that reconstructs images using image data obtained from said first detecting unit and image data obtained from said second detecting unit, wherein the first detecting unit is adapted to conduct tomography by means of single photon emission computer tomography, wherein a plane that includes said first orbit is different from a plane that includes said second orbit.

The present invention is also the tomograph described above, wherein the radiation detector of said first detecting unit is equipped with a pinhole collimeter.

The present invention is also the tomograph described above, wherein said second detecting unit conducts tomography by means of single photon emission computer tomography.

The present invention is also the tomograph described above, wherein said second detecting unit conducts tomography by means of positron emission computer tomography.

The present invention is also the tomograph described above, wherein a plane that includes said first orbit and a plane that includes said second orbit produce angles of 45° and 90° respectively relative to the axis of the subject.

The present invention is an emission tomography method according to claim 6 comprising a first detecting step of detecting radiations by one or more radiation detectors moving around a subject along a first orbit, and a second detecting step of detecting radiations by one or more radiation detectors moving around said subject along a second orbit that is placed further away from said subject than said first orbit, and

an image reconstructing step of reconstructing images using image data obtained from said first detecting step and image data obtained from said second detecting step, wherein a plane that includes said first orbit is different from a plane that includes said second orbit.

According to the invention, said first detecting step conducts tomography by means of single photon emission computer tomography.

The present invention is also the tomography method described above, wherein the radiation detector used in said first detecting step is equipped with a pinhole collimator.

The present invention is also the tomography method described above, wherein said second detecting step conducts tomography by means of single photon emission computer tomography.

The present invention is also the tomography method described above, wherein said second detecting step conducts tomography by means of positron emission computer tomography.

The present invention is also the tomography method described above, wherein a plane that includes said first orbit and a plane that includes said second orbit produce angles of 45° and 90° respectively relative to the axis of the subject.

EFFECT OF THE INVENTION

The present invention enables one in tomography for large subjects such as a human body to obtain image data of a high spatial resolution from the first detector close to the subject and image data without truncation from the wide view second detector, thus producing reconstructed images of high resolution without truncation.

Also, it enables one to obtain perfect reconstructed images in all view angles since the plane that includes said first orbit is different from the plane that includes said second orbit thus causing the image data to satisfy the Tuy's condition.

BRIEF DESCRIPTION OF DRAWINGS

The above and other objects, features and advantages of the present invention will become apparent from the following description and appended claims, taken in conjunction with the accompanying drawings.

Fig. 1 is an approximate side view of a tomograph according to the present invention.
Fig. 2 is an approximate front view of said tomograph.
Fig. 3 is an approximate perspective view showing only a characteristic part of said tomograph.
Fig. 4 is an approximate perspective view showing only a characteristic part of another tomograph according to the present invention.

## MODE(S) FOR CARRYING OUT THE INVENTION

The details of a tomograph according to an embodiment of the present invention will be described below using the accompanied drawings.

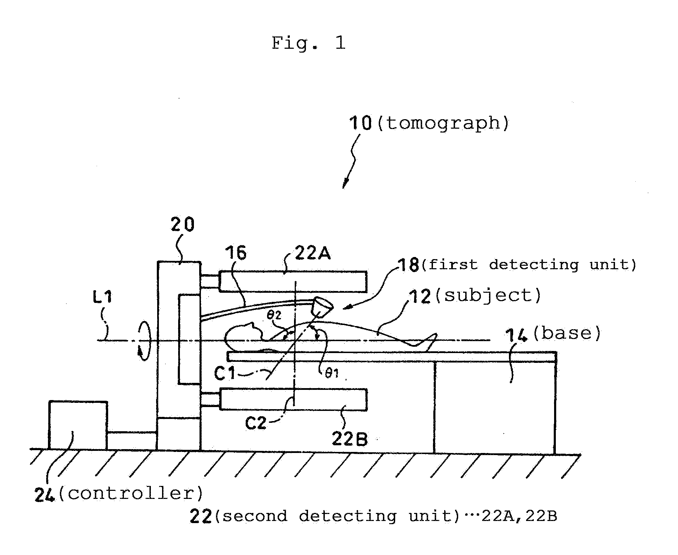

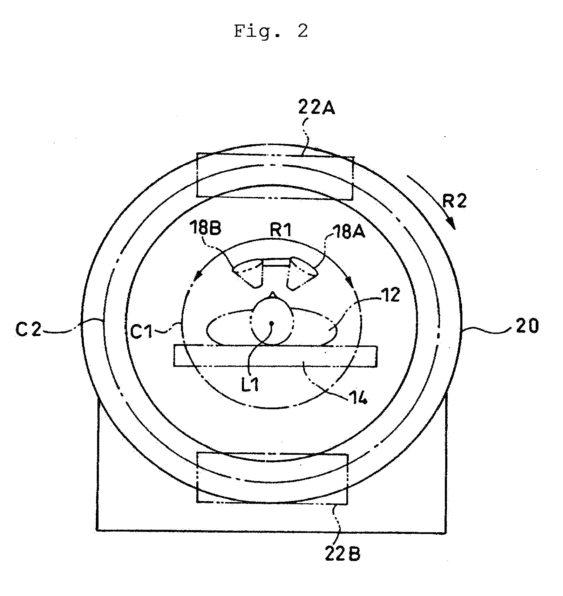

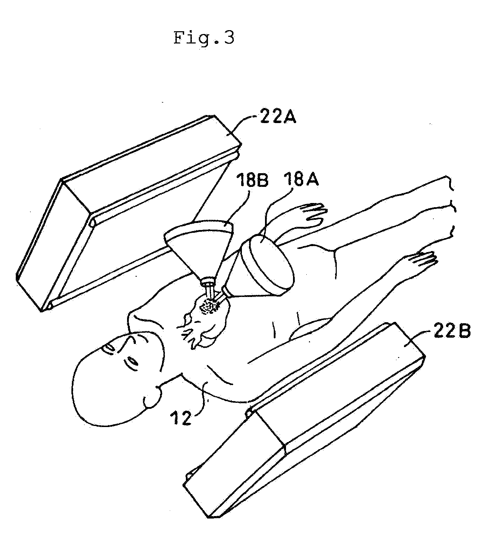

Fig. 1 is an approximate side view of a tomograph 10 according to an embodiment of the present invention, Fig. 2 is an approximate front view of tomograph 10, and Fig. 3 is an approximate perspective view showing only a characteristic part of said tomograph 10.

Tomograph 10 according to an embodiment of the present invention have a base 14 capable of supporting a subject 12 such as a patient, a first detecting unit 18 cantilever-supported by a swiveling device 16, a second detecting unit 22 cantilever-supported by a rotating device 20, and a controller 24.

The first detecting unit 18 consists of a plurality (two in the present embodiment) of gamma cameras for SPECT ("radiation detectors" according to the present invention) 18A an 18B arranged in such a way that their view field centers approximately match. Although it is preferable that the view field centers of these gamma cameras match in order to avoid complexity of the image reconstruction programming, it is not necessary that they match approximately.

Each of the gamma cameras 18A and 18B is equipped with conical pinhole collimeter, and is capable of detecting through the pinhole formed at the tip of the pinhole collimeter the two-dimensional incidence position of the radiation emitted from the nuclide (radio isotope: RI) injected into the subject 12.

The first detecting unit 18 is cantilever-supported by the arm-shaped swiveling device 16. This first detecting unit 18 is constituted in such a way as to be able to swivel (move) along a first orbit C1 established as an arc around the subject 12 with the axis L1 of the subject 12 (hereinafter called "subject axis L1") as the axis within the range of arrow R1 (see Fig. 2) when a swiveling device 16 is driven. The first orbit C1 along which the first detecting unit 18 moves is an orbit tilted at an angle $\theta 1$ (45° in the present embodiment) relative to the subject axis L1 as shown in Fig. 1.

While the first detecting unit 18 is constituted to swivel within the specified range in the present embodiment, "the first detecting unit" according to the present invention is not limited to it; for example, the first detecting unit 18 can be set up to move along the entire circumference of the first orbit C1, or the tilt angle $\theta 1$ of the first orbit C1 relative to the subject axis L1 can be arbitrarily set up.

In the meanwhile, the second detector 22 consists of a plurality (two in the present embodiment) of flat gamma cameras for SPECT ("radiation detectors" according to the present invention) 22A and 22B arranged in such a way that their view field centers approximately match.

The gamma cameras 22A and 22B are, similar to the abovementioned gamma cameras 18A and 18B, capable of detecting the two-dimensional incidence position of the radiation emitted from the nuclide (radio isotope: RI) injected into the subject 12.

The second detecting unit 22 is cantilever-supported by the disc-shaped rotating device 20. The second detecting unit 22 is constituted in such a way as to be able to move over the entire circumference of the subject 12 by driving the rotating device 20 in the direction of arrow R2 (see Fig. 2) along a circular orbit C2, which is placed further away from the subject 12 than the first orbit C1. The second orbit C2 along which the second detecting unit 22 moves is an orbit tilted at an angle $\theta 2$ (90° in the present embodiment) relative to the subject axis L1 as shown in Fig. 1. In other words, the second orbit C2 is tilted in such a way that the plane that includes the first orbit C1 is different from the plane that includes the second orbit C2.

Although the second detecting unit 22 in this embodiment is constituted in such a way as to be movable in the direction of R2 for the entire circumference of the subject 12, "the second detecting unit" according to the present invention is not limited to that, but rather the second detecting unit 22 can also be constituted to be movable along the second orbit C2 within a certain range and the tilt angle $\theta 2$ of the second orbit C2 relative to the subject axis L1 can be set to the same angle as the tilt angle $\theta 1$ of the first orbit C1 relative to the subject axis L1.

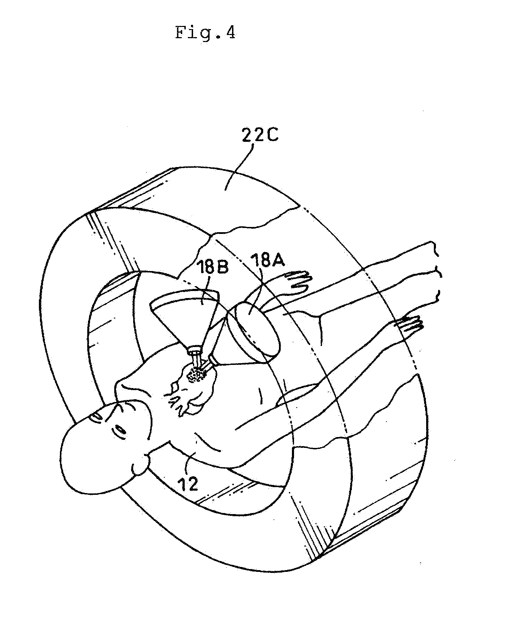

Moreover, the "second detector" according to the present invention is not limited to the detector for SPECT, and the gamma cameras 22A and 22B for SPECT can be substituted by a set (multiple pairs) of gamma camera 22C for PET as shown in Fig. 4.

The controller 24 consists of a controlling unit for controlling the motion of the first detecting unit 18 by the swiveling unit 16, controlling the motion of the second detecting unit 22 by the rotating device 20, an image reconstructing unit for reconstructing images based on a plurality of image data collected by the first detecting unit 18 and the second detecting unit 22, etc.

Next, the action of tomograph 10 according to the present embodiment will be described in detail below.

When the swiveling device 16 is driven by the controller 24, the first detecting unit 18 is swiveled along the first orbit C1 around the subject 12 within the range of the arrow R1 to collect the image data by detecting the radiation around the subject 12.

Also, when the rotating device 20 is driven by the controller 24, the second detecting unit 22 is moved along the second orbit C2 around the entire circumference of the subject 12 in the direction of the arrow R2 to collect the image data by detecting the radiation around the subject 12.

The controller 24 obtains a reconstructed image by reconstructing the CT image, which is a tomography image, based on high spatial resolution image data collected by the first detecting unit 18 and wide view image data collected by the second detecting unit 22.

While various publicly known methods, such as analytical methods including the direct Fourier reverse conversion method using Fourier conversion and others, the filter compensation backward projection method (FBP method), and the convolution back-projection method (CBP method), and algebraic methods such as the successive approximation method can be used for reconstructing images, the successive approximation method, which is shown below, is preferably used.

In other words, the particular image reconstruction method is a method for updating the image by successive approximation, and it is to estimate an image that maximizes the probability density function defined by the following formula:

[Mathematical formula 1]

$$P(y;\lambda) = \prod_i \left\{ \frac{\left(\sum_j a_{ij} \lambda_j\right)^{y_i}}{y_i!} \exp\left[-\sum_j a_{ij} \lambda_j\right] \right\}$$

The calculation formula for actual successive approximation is as follows:

[Mathematical formula 2]

$$\lambda_j^{(k+1)} = \frac{\lambda^{(k)}}{\sum_j a_{ij}} \sum_i \frac{a_{ij} y_i}{\sum_n a_{in} \lambda_n^{(k)}}$$

where $\lambda$ is the reconstructed image, $\lambda_j$ is the count value of the j-th pixel (position) in the image, while k and k+1 are k-th and k+1-st calculated images respectively. Also, y is measured data, i.e., projection data, and $y_i$ is the count value of the data of the i-th pixel. Further, $a_{ij}$ is a coefficient, which is a geometrically determined value the degree of contribution of the j-th pixel value of the i-th projection data. An image can be reconstructed by successively approximating images using the projection data y of two different resolutions, i.e, the high resolution image data collected by the first detecting unit 18 and the wide view image data collected by the second detecting unit 22.

Such an image reconstruction process enables one with the help of image data collected by the first detecting unit 18 to interpolate the image data that could not be collected due to the fact that the first detecting unit 18 is blocking the view of the second detecting unit 22 (the case where the first detecting unit 18 is located in a space inside of the second detecting unit 22).

As described above, the tomograph 10 according to the present embodiment consists of the first detecting unit 18 that is equipped with one or more radiation detectors (gamma cameras 18A and 18B in the present embodiment), which are arranged in such a way that the view field centers of pinhole collimeters they own approximately match with each other, and is capable of moving around the subject 12 along the first orbit C1, and the second detecting unit 22 that is equipped with a plurality of radiation detectors (gamma cameras 22A and 22B in the present embodiment) and is capable of moving around the subject 12 along the second orbit C2 that is placed further away from the subject 12 than the first orbit C1, so that the present invention enables one to use the image data of a high spatial resolution obtained by the first detector 18 placed close to the subject 12 and the image data without truncation obtained the wide view second detecting unit 22 to reconstruct images of high resolution without truncation.

In particular, it enables one to obtain perfect reconstructed images in all view angles since the plane that includes the first orbit C1 is different from the plane that includes the second orbit C2 thus causing the image data to satisfy the Tuy's condition.

The tomograph according to the present invention is especially suitable for tomography of large subjects such as a human body as it has an excellent effect of providing reconstructed images of high resolution without truncation even in case of large subjects.

**Claims**

1. An emission tomograph (10) comprising:

   a first detecting unit (18) that has one or more radiation detectors (18A, 18B) and is adapted to move around a subject (12) along a first orbit (C1); and
   a second detecting unit (22) that has one or more radiation detectors (22A, 22B, 22C) and is adapted to move around said subject (12) along a second orbit (C2) that is placed further away from said subject (12) than said first orbit (C1), and
   an image reconstructing unit that reconstructs images using image data obtained from said first detecting unit (18) and image data obtained from said second detecting unit (22),
   wherein said first detecting unit (18) is adapted to conduct tomography by means of single photon emission computer tomography, **characterized in that**
   a plane that includes said first orbit (C1) is different from a plane that includes said second orbit (C2).

2. The tomograph (10) of claim 1, wherein
   the radiation detector (18A, 18B) of said first detecting unit (18) is equipped with a pinhole collimator.

3. The tomograph (10) of claim 2, wherein
   said second detecting unit (22) is adapted to conduct tomography by means of single photon emission computer tomography.

4. The tomograph (10) of claim 2, wherein
   said second detecting unit (22) is adapted to conduct tomography by means of positron emission computer tomography.

5. The tomograph (10) of either one of claims 1 through 4, wherein
   a plane that includes said first orbit (C1) and a plane that includes said second orbit (C2) produce angles of 45° and 90° respectively relative to the axis of the subject (12).

6. Emission tomography method comprising:

   a first detecting step of detecting radiations by one or more radiation detectors (18A, 18B) moving around a subject (12) along a first orbit (C1); and
   a second detecting step of detecting radiations by one or more radiation detectors (22A, 22B, 22C) moving around said subject (12) along a second orbit (C2) that is placed further away from said subject (12) than said first orbit (C1), and
   an image reconstructing step of reconstructing images using image data obtained from said first detecting step and image data obtained from said second detecting step,
   wherein said first detecting step conducts tomography by means of single photon emission computer tomography, **characterized in that**
   a plane that includes said first orbit (C1) is different from a plane that includes said second orbit

7. The tomography method of claim 6, wherein
   the radiation detector (18A, 18B) used in said first detecting step is equipped with a pinhole collimator.

8. The tomography method of claim 7, wherein
   said second detecting step conducts tomography by means of single photon emission computer tomography.

9. The tomography method of claim 7, wherein
   said second detecting step conducts tomography by means of positron emission computer tomography.

**10.** The tomography method of either one of claims 6 through 9, wherein
a plane that includes said first orbit (C1) and a plane that includes said second orbit (C2) produce angles of 45° and 90° respectively relative to the axis of the subject (12) .

**11.** A tomography program that causes a computer to execute the tomography method of either one of claims 6 through 10.

**12.** A computer readable recording medium where the tomography program described in claim 11 is recorded.

**Patentansprüche**

**1.** Ein Emissions-Tomograph (10), umfassend:

eine erste Detektionseinheit (18), die einen oder mehrere Strahlungsdetektoren (18A, 18B) aufweist und dazu ausgelegt ist, um sich entlang einer ersten Umlaufbahn (C1) um ein Subjekt (12) herum zu bewegen; und
eine zweite Detektionseinheit (22), die einen oder mehrere Strahlungsdetektoren (22A, 22B, 22C) aufweist und dazu ausgelegt ist, um sich entlang einer zweiten Umlaufbahn (C2) um das Subjekt (12) herum zu bewegen, wobei die zweite Umlaufbahn (C2) von dem Subjekt (12) weiter entfernt ist als die erste Umlaufbahn (C1), und
eine Bildrekonstruktionseinheit, die, unter Verwendung von Bilddaten, die durch die erste Detektionseinheit (18) und Bilddaten, die durch die zweite Detektionseinheit (22) erhalten wurden, Bilder rekonstruiert, wobei die erste Detektionseinheit (18) dazu ausgelegt ist eine Tomographie mittels Einzelphotonenemissions-Computertomographie durchzuführen, **dadurch gekennzeichnet, dass**
eine Ebene, welche die ersten Umlaufbahn (C1) beinhaltet unterschiedlich zu einer Ebene ist, welche die zweite Umlaufbahn (C2) beinhaltet.

**2.** Der Tomograph nach Anspruch 1, wobei der Strahlungsdetektor (18A, 18B) der ersten Detektionseinheit (18) mit einem Pinhole-Kollimator ausgestattet ist.

**3.** Der Tomograph nach Anspruch 2, wobei die zweite Detektionseinheit (22) dazu ausgelegt ist eine Tomographie mittels Einzelphotonenemissions-Computertomographie durchzuführen.

**4.** Der Tomograph nach Anspruch 2, wobei die zweite Detektionseinheit (22) dazu ausgelegt ist eine Tomographie mittels Positronen-Emissions-Computertomographie durchzuführen.

**5.** Der Tomograph nach einem der Ansprüche 1 bis 4, wobei eine Ebene die die erste Umlaufbahn (C1) beinhaltet und eine Ebene die die zweite Umlaufbahn (C2) beinhaltet relativ zu der Achse des Subjekts (12) einen Winkel von 45° bzw. 90° bildet.

**6.** Emissions-Tomographieverfahren umfassend:

einen ersten Detektionsschritt zum Detektieren von Strahlungen durch einen oder mehrere Strahlungsdetektoren (18A, 18B), die sich um ein Subjekt entlang einer ersten Umlaufbahn (C1) bewegen;
und einen zweiten Detektionsschritt zum Detektieren von Strahlungen durch einen oder mehrere Strahlungsdetektoren (22A, 22B, 22C), die sich um ein Subjekt entlang einer zweiten Umlaufbahn (C2) bewegen, die von dem Subjekt (12) weiter entfernt ist als die erste Umlaufbahn (C1), und
einen Bildrekonstruktionsschritt zum Rekonstruieren von Bildern unter Verwendung von Bilddaten, die in dem ersten Detektionsschritt erhalten wurden, und von Bilddaten, die in dem zweiten Detektionsschutt erhalten wurden, wobei die erste Detektionseinheit (18) eine Tomographie mittels Einzelphotonenemissions-Computertomographie durchführt,
**dadurch gekennzeichnet, dass**
eine Ebene welche die ersten Umlaufbahn (C1) beinhaltet unterschiedlich zu einer Ebene ist, die die zweite Umlaufbahn (C2) beinhaltet.

**7.** Das Tomographieverfahren nach Anspruch 6, wobei der Strahlungsdetektor (18A, 18B) der in dem ersten Detektionsschritt verwendet wird mit einem Pinhole-Kollimator ausgestattet ist.

**8.** Das Tomographieverfahren nach Anspruch 7, wobei der zweite Detektionsschritt eine Tomographie mittels Einzelphotonenemissions-Computertomographie durchführt.

9. Das Tomographieverfahren nach Anspruch 7, wobei der zweite Detektionsschritt eine Tomographie mittels Positronen-Emissions-Computertomographie durchführt.

10. Das Tomographieverfahren nach einem der Ansprüche 6 bis 9, wobei eine Ebene die die erste Umlaufbahn (C1) beinhaltet und eine Ebene die die zweite Umlaufbahn (C2) beinhaltet relativ zu der Achse des Subjekts (12) einen Winkel von 45° bzw. 90° bildet.

11. Ein Tomographieprogramm das einen Computer veranlasst ein Tomographieverfahren gemäß einem der Ansprüche 6 bis 10 durchzuführen.

12. Ein Computerlesbares Aufzeichnungsmedium, auf dem das in Anspruch 11 beschriebenen Tomographieprogramm aufgezeichnet ist.

**Revendications**

1. Tomographe à émission (10) comprenant :

   une première unité de détection (18) qui comporte un ou plusieurs détecteurs de radiation (18A, 18B) et est apte à se déplacer autour d'un sujet (12) le long d'une première orbite (C1) ; et
   une deuxième unité de détection (22) qui comporte un ou plusieurs détecteurs de radiation (22A, 22B, 22C) et est apte à se déplacer autour dudit sujet (12) le long d'une deuxième orbite (C2) qui est placée plus loin dudit sujet (12) que ladite première orbite (C1), et
   une unité de reconstruction d'images qui reconstruit des images au moyen de données d'images obtenues à partir de ladite première unité de détection (18) et de données d'images obtenues à partir de ladite deuxième unité de détection (22),
   sachant que ladite première unité de détection (18) est apte à effectuer la tomographie moyennant une tomographie à émission monophotonique par ordinateur, **caractérisé en ce que**
   un plan qui inclut ladite première orbite (C1) est différent d'un plan qui inclut ladite deuxième orbite (C2).

2. Le tomographe (10) de la revendication 1, dans lequel le détecteur de radiation (18A, 18B) de ladite première unité de détection (18) est équipé d'un collimateur sténopéique.

3. Le tomographe (10) de la revendication 2, dans lequel
   ladite deuxième unité de détection (22) est apte à effectuer la tomographie moyennant une tomographie à émission monophotonique par ordinateur.

4. Le tomographe (10) de la revendication 2, dans lequel
   ladite deuxième unité de détection (22) est apte à effectuer la tomographie moyennant une tomographie à émission de positrons par ordinateur.

5. Le tomographe (10) de l'une quelconque des revendications 1 à 4, dans lequel
   un plan qui inclut ladite première orbite (C1) et un plan qui inclut ladite deuxième orbite (C2) produisent des angles de 45° et de 90° respectivement par rapport à l'axe du sujet (12).

6. Procédé de tomographie à émission comprenant :

   une première étape de détection consistant à détecter des radiations à l'aide d'un ou de plusieurs détecteurs de radiation (18A, 18B) se déplaçant autour d'un sujet (12) le long d'une première orbite (C1) ; et
   une deuxième étape de détection consistant à détecter des radiations à l'aide d'un ou de plusieurs détecteurs de radiation (22A, 22B, 22C) se déplaçant autour dudit sujet (12) le long d'une deuxième orbite (C2) qui est placée plus loin dudit sujet (12) que ladite première orbite (C1), et
   une étape de reconstruction d'images consistant à reconstruire des images au moyen de données d'images obtenues à partir de ladite première étape de détection et de données d'images obtenues à partir de ladite deuxième étape de détection,
   sachant que ladite première étape de détection effectue la tomographie moyennant une tomographie à émission monophotonique par ordinateur, **caractérisé en ce que**
un plan qui inclut ladite première orbite (C1) est différent d'un plan qui inclut ladite deuxième orbite.

7. Le procédé de tomographie de la revendication 6, dans lequel
le détecteur de radiation (18A, 18B) utilisé dans ladite première étape de détection est équipé d'un collimateur sténopéique.

8. Le procédé de tomographie de la revendication 7, dans lequel
ladite deuxième étape de détection effectue la tomographie moyennant une tomographie à émission monophotonique par ordinateur.

9. Le procédé de tomographie de la revendication 7, dans lequel
ladite deuxième étape de détection effectue la tomographie moyennant une tomographie à émission de positrons par ordinateur.

10. Le procédé de tomographie de l'une quelconque des revendications 6 à 9, dans lequel
un plan qui inclut ladite première orbite (C1) et un plan qui inclut ladite deuxième orbite (C2) produisent des angles de 45° et de 90° respectivement par rapport à l'axe du sujet (12).

11. Programme de tomographie qui fait en sorte qu'un ordinateur exécute le procédé de tomographie de l'une quelconque des revendications 6 à 10.

12. Support d'enregistrement lisible par ordinateur, dans lequel le programme de tomographie décrit dans la revendication 11 est enregistré.

Fig. 1

10 (tomograph)

20

16   22A   18 (first detecting unit)

L1   12 (subject)

θ2   14 (base)

C1   θ1

C2   22B

24 (controller)

22 (second detecting unit)···22A, 22B

Fig. 2

Fig.3

22A

18B  18A

22B

12

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5717212 A
- EP 1004898 A1
- EP 1132756 A2
- JP 2004233149 A

**Non-patent literature cited in the description**

- **H. K. TUY.** An inversion formula for cone-beam reconstruction. *SIAM J. APPL. MATH.,* 1983, vol. 43 (3), 546-552
- **TSUTOMU ZENIYA.** A new reconstruction strategy for image improvement in pinhole SPECT. *European Journal of Nuclear Medicine and Molecular Imaging,* 2004, vol. 31 (8), 1166-1172